# EUROPÄISCHE PATENTSCHRIFT

(11) **EP 3 568 331 B1**
(45) Veröffentlichungstag und Bekanntmachung des Hinweises auf die Patenterteilung: **14.07.2021**
(21) Anmeldenummer: 18701275.2
(22) Anmeldetag: 12.01.2018
(51) Int. Cl.: F16C 33/38, B62D 1/16, B62D 1/20, F16C 3/035

(54) **LENKWELLE FÜR EIN KRAFTFAHRZEUG**
STEERING SHAFT FOR A MOTOR VEHICLE
ARBRE DE DIRECTION POUR UN VÉHICULE AUTOMOBILE

(30) Priorität: 16.01.2017 DE 102017200578
(43) Veröffentlichungstag der Anmeldung: 20.11.2019
(73) Patentinhaber: thyssenkrupp Presta AG, 9492 Eschen (LI); thyssenkrupp AG, 45143 Essen (DE)
(72) Erfinder: SCHMIDT, René Marco, 9464 Lienz (CH)
(74) Vertreter: thyssenkrupp Intellectual Property GmbH
(86) Internationale Anmeldenummer: PCT/EP2018/050712
(87) Internationale Veröffentlichungsnummer: WO 2018/130631

(56) Entgegenhaltungen:
- WO-A1-2005/098253
- DE-A1- 10 008 556
- KR-A- 20020 091 913
- KR-B1- 101 500 442

## Beschreibung

### Stand der Technik

Die Erfindung betrifft eine Lenkwelle für ein Kraftfahrzeug, umfassend eine Hohlwelle und eine Innenwelle, welche koaxial in der Hohlwelle angeordnet, relativ zur Hohlwelle in Richtung der Längsachse der Lenkwelle teleskopierbar und mit der Hohlwelle über mindestens eine Kugel drehmomentschlüssig verbunden ist, wobei koaxial zwischen Innenwelle und Hohlwelle ein Kugelkäfig angeordnet ist, der mindestens eine radiale Aufnahmeöffnung aufweist, in der eine Kugel frei drehbar aufgenommen ist, und die einen umlaufenden Öffnungsrand aufweist. Ein Kugelkäfig für eine derartige Lenkwelle ist ebenfalls Gegenstand der Erfindung, wobei zumindest eine Haltezunge, die sich über einen Umfangsteilbereich der Aufnahmeöffnung erstreckt, von dem Öffnungsrand vorsteht, wobei die Haltezunge federnd ausgebildet ist, und zwei oder mehr Haltezungen über den Umfang der Aufnahmeöffnung verteilt angeordnet sind, wobei zumindest zwei Haltezungen bezüglich der Aufnahmeöffnung paarweise gegenüberliegend angeordnet sind.

Der Einsatz einer in ihrer Achsrichtung teleskopierbaren Lenkwelle in einem Kraftfahrzeug ermöglicht eine Verstellung der Lenksäule zur Einstellung der Lenkradposition in Längsrichtung. Außerdem kann die Lenkwelle im Fall eines Crashs in Richtung ihrer Längsachse in sich zusammengeschoben werden, wodurch wirksam verhindert wird, dass die Lenksäule in das Innere der Fahrgastzelle eindringt und zu Verletzungen der Insassen führt. Dies wird erreicht durch zwei in Achsrichtung gegeneinander teleskopierbare Wellen, nämlich einer Hohlwelle, die als äußere Welle bzw. Außenwelle durch ein rohrförmiges Hohlprofil gebildet wird, und einer darin in Richtung der Längsachse der Lenkwelle teleskopartig, d.h. axial verschieblich gelagerten inneren Welle, an deren bezüglich der Fahrtrichtung hinteren Ende das Lenkrad montiert ist. Durch teleskopierendes Zusammenschieben oder Ausziehen von Innenwelle und Hohlwelle kann die Lenkwelle verkürzt oder verlängert werden.

Zwischen der Hohlwelle und der Innenwelle sind in der gattungsgemäßen Bauweise zumindest eine, in der Regel mehrere Kugeln als Wälzkörper angeordnet, die zwischen der Außenfläche der Innenwelle und der Innenfläche der Hohlwelle in Richtung der Längsachse abrollen können. Dadurch wird eine Linearlagerung für eine leichtgängige kugelgelagerte axiale Verstellbarkeit der Innenwelle relativ zur Hohlwelle realisiert. Zur Übertragung des zur Lenkung eingebrachten Drehmoments weisen die Innenwelle auf ihrer Außenseite und die Hohlwelle auf ihrer Innenseite nut- oder rillenförmige, einander radial gegenüberliegende, in Richtung der Längsachse verlaufende Kugellaufbahnen auf, zwischen denen die Kugeln angeordnet sind und als Formschlusselemente dienen, wodurch ein bezüglich einer Drehung um die Längsachse wirksamer Formschluss gebildet wird, der Hohl- und Innenwelle drehmomentschlüssig miteinander verbindet. Gattungsgemäße Lenkwellen werden daher auch als Rollschiebewellen bezeichnet.

Die Kugeln werden dadurch zwischen den Wellen und mit Abstand relativ zueinander in Position gehalten und geführt, dass sie in einem Kugelkäfig um ihre Abrollachsen, d.h. um ihren Kugelmittelpunkt frei drehbar aufgenommen sind, wie beispielsweise in der US 2009/0143151 A1 beschrieben. Darin ist der Kugelkäfig koaxial in dem Zwischenraum zwischen Hohlwelle und Innenwelle angeordnet und hohlprofilartig mit einer im Wesentlichen hohlprismenförmigen oder hohlzylindrischen Grundform ausgestaltet, die koaxial zur Längsachse liegt. Jede der Kugeln ist in einer Kugelaufnahme angeordnet, die eine radial, senkrecht zur Längsachse durch die Wandung des Hohlprofils durchgehende Aufnahmeöffnung aufweist. Deren Innenquerschnitt ist so bemessen, dass eine Kugel in der Aufnahmeöffnung mit Spiel aufnehmbar ist, so dass sie innerhalb der Kugelaufnahme frei um ihr Zentrum drehbar ist. Dabei steht die Kugel nach außen über den Außenumfang und nach innen über den Innenumfang jeweils radial über den kreisförmig umlaufenden Öffnungsrand der Aufnahmeöffnung vor, so dass sie in den nut- oder rillenförmigen Kugellaufbahnen in der Innenseite der Hohlwelle und der Außenseite der Innenwelle in Längsrichtung ungehindert abrollen kann.

Zur Montage werden die Kugeln zunächst in die Aufnahmeöffnungen der Kugelaufnahmen eingesetzt, anschließend wird der mit sämtlichen Kugeln bestückte Kugelkäfig axial in Längsrichtung zwischen Innenwelle und Hohlwelle eingesetzt. Damit dabei die Kugeln nicht aus den Kugelaufnahmen herausfallen, ist beispielsweise aus der US 2009/0143151 A1 bekannt, dass die Aufnahmeöffnungen einen hohlkugelförmigen Längsquerschnitt haben, wobei der Eintrittsdurchmesser des kreisförmig umlaufenden Öffnungsrands kleiner ist als der Kugeldurchmesser. Beim Einsetzen wird der Öffnungsrand elastisch durch die Kugel aufgeweitet, bis die Kugel in Funktionsposition innerhalb der Aufnahmeöffnung einschnappt. Dann zieht sich der Öffnungsrand wieder auf sein Ursprungsmaß zusammen, wodurch die Kugel in einem losen Formschluss innerhalb der Aufnahmeöffnung gehalten und gegen Herausfallen gesichert ist. Die erforderliche elastische Verformbarkeit wird durch das Material des Kugelkäfigs zur Verfügung gestellt, beispielsweise Kunststoff, bei einem als Spritzgussteil gefertigten Kugelkäfig ein thermoplastisches Polymer wie beispielsweise Polyoxymethylen (POM), Polypropylen (PP) oder dergleichen.

Damit die Kugeln sicher durch Formschluss in der Aufnahmeöffnung gehalten werden, muss der Eintrittsdurchmesser des Öffnungsrands kleiner sein als der Kugeldurchmesser, darf dabei jedoch nicht zu klein sein, da ansonsten die Aufweitung beim Einsetzen der Kugel zu stark ist mit der Folge, dass der Öffnungsrand überdehnt wird und dadurch plastisch verformt oder beschädigt wird. Entsprechend muss der Eintrittsquerschnitt des Öffnungsrands mit engen Toleranzen an den Kugeldurchmesser angepasst werden. Insbesondere wenn für unterschiedliche Ausführungen von Lenkwellen oder zum Ausgleich von Fertigungstoleranzen Kugeln mit unterschiedlichen Kugeldurchmessern eingesetzt werden, ist problematisch, dass Kugeln mit kleinem Kugeldurchmesser nicht sicher formschlüssig in der Aufnahmeöffnung gehalten werden, und Kugeln mit großem Kugeldurchmesser nur schwergängig und mit dem Risiko von Beschädigungen in den Kugelkäfig eingesetzt werden können.

Aus der KR 101 500 442 B1 ist eine Lenkwelle der eingangs genannten Art bekannt. Diese weist pro Aufnahmeöffnung ein Paar von Haltezungen auf. Nachteilig daran ist, dass eine leichtere Montierbarkeit eine höhere Gefahr von Beschädigungen und eine verringerte Betriebssicherheit bewirkt.

Angesichts der vorangehend erläuterten Problematik ist es eine Aufgabe der vorliegenden Erfindung, eine verbesserte Rollschiebewelle mit einem Kugelkäfig zur Verfügung zu stellen, wobei ermöglicht wird, die Montage zu vereinfachen, die Gefahr von Beschädigungen zu verringern und die Betriebssicherheit zu erhöhen..

### Darstellung der Erfindung

Diese Aufgabe wird durch eine motorisch verstellbare Lenksäule für ein Kraftfahrzeug mit den Merkmalen des Anspruchs 1 gelöst. Vorteilhafte Weiterbildungen ergeben sich aus den Unteransprüchen.

Erfindungsgemäß wird vorgeschlagen, dass mehrere Paare von einander jeweils gegenüberliegenden Haltezungen realisiert sind.

Erfindungsgemäß werden mehrere Paare von einander jeweils gegenüberliegenden Haltezungen realisiert, wodurch die formschlüssige Haltewirkung auf eine größere Anzahl von Haltezungen verteilt wird, so dass die mögliche Belastung einer einzelnen Haltezunge verringert wird. Außerdem können die Haltezungen jeweils kürzer bemessen sein, so dass jede einzelne Haltezunge beim Einsetzen einer Kugel weniger stark umgebogen wird und somit gleichzeitig die Montage vereinfacht und die Gefahr von Beschädigungen verringert wird.

Ein weiterer Vorteil von mehreren Paaren von Haltezungen ist, dass eine redundante Anordnung geschaffen wird, so dass, wenn durch Beschädigung einer Haltezunge eine der paarweisen Anordnungen zerstört wird, immer noch zumindest eine intakte paarweise gegenüberliegende Anordnung von Haltezungen vorhanden ist, welche für eine sichere Halterung der Kugel in der Kugelaufnahme sorgt.

Erfindungsgemäß wird die Kugel nicht wie im Stand der Technik durch den durchgehend umlaufenden Öffnungsrand der Aufnahmeöffnung formschlüssig gehalten, sondern durch mindestens eine Haltezunge, deren Breite lediglich einem Teilbereich des Umfangs entspricht, und die in den Öffnungsquerschnitt vorstehend hineinragt. Dazu hat die Haltezunge ein festes Ende, welches an dem Kugelkäfig im Bereich des Öffnungsrands befestigt ist, und ein freies Ende, welches über den Öffnungsrand vorsteht und in den freien Öffnungsquerschnitt der Aufnahmeöffnung hineinragt. Der Eintrittsquerschnitt, durch den die Kugel in die Aufnahmeöffnung einsetzbar ist, wird folglich nicht durch den kreisförmig geschlossen umlaufenden Durchmesser des Öffnungsrands begrenzt, sondern durch das freie Ende der erfindungsgemäß davon vorstehenden Haltezunge. Dadurch wird nicht wie im Stand der Technik die Aufnahmeöffnung beim Einsetzen einer Kugel im Bereich des Öffnungsrands aufgeweitet, sondern es ist lediglich eine Verbiegung der Haltezunge quer zur Durchgangsrichtung der Aufnahmeöffnung erforderlich, um den Eintrittsquerschnitt der Aufnahmeöffnung freizugeben und den Eintritt der Kugel in die Kugelaufnahme zu ermöglichen.

Eine Haltezunge kann realisiert werden durch einen schmalen, stegartigen Vorsprung, dessen Breite geringer ist als der Durchmesser der Aufnahmeöffnung, bevorzugt geringer als der Radius der Aufnahmeöffnung. Vom Öffnungsrand aus gesehen erstreckt sich die Haltezunge mit ihrer Länge in den Öffnungsquerschnitt der Aufnahmeöffnung hinein. Die Länge der Haltezunge ist kleiner als der Radius der Aufnahmeöffnung, besonders bevorzugt kleiner als der halbe Radius.

Bei der erfindungsgemäßen Anordnung bildet die Haltezunge ein Formschlusselement, welches ausgebildet ist, die Kugel in Durchgangsrichtung, dies ist die Achsrichtung der Aufnahmeöffnung, im losen Formschluss in der Aufnahmeöffnung zu halten und gegen Herausfallen aus dem vom umlaufenden Öffnungsrand begrenzten offenen Eintrittsquerschnitt zu sichern. Dabei erstreckt sich steht die Haltezunge so weit, dass durch deren freies Ende auch Kugeln mit dem kleinsten eingesetzten Kugeldurchmesser sicher in der Aufnahmeöffnung zurückgehalten werden. Dadurch kann der durch den geschlossen umlaufenden Öffnungsrand begrenzte Durchmesser der Aufnahmeöffnung größer als der größte eingesetzte Kugeldurchmesser sein, so dass auch beim Einsetzen der größten Kugeln keine Aufweitung des Öffnungsrands erfolgt. Entsprechend werden Beschädigungen der Aufnahmeöffnung beim Einsetzen der Kugeln vermieden.

Eine vorteilhafte Ausführung sieht vor, dass die mindestens eine Haltezunge federnd ausgebildet ist. Dabei kann die Haltezunge als biegeelastische Federzunge ausgestaltet sein. Beim Einsetzen einer Kugel kann die Haltezunge elastisch quer zu ihrer Längserstreckung federnd auf- oder umgebogen werden, wobei das freie Ende bezüglich der Aufnahmeöffnung nach außen in Richtung auf den Öffnungsrand zu bewegt wird. Dabei gibt die Haltezunge den durch den Öffnungsrand begrenzten Eintrittsquerschnitt frei, der wie vorangehend erwähnt größer ist als der größte Kugeldurchmesser. Nachdem die Kugel beim Einsetzen den Öffnungsrand ins Innere der Aufnahmeöffnung passiert hat, federt die Haltezunge zurück und hält die Kugel in losem Formschluss in der Kugelaufnahme. Auf diese Weise können auch Kugeln mit dem größten Kugeldurchmesser unter lediglich elastischer Biegeverformung der Haltezunge in die Aufnahmeöffnung eingeschnappt werden, und auch Kugeln mit kleinerem Kugeldurchmesser werden durch die Haltezunge sicher in der Aufnahmeöffnung gehalten.

Eine bevorzugte Ausführung sieht vor, dass zwei oder mehr Haltezungen über den Umfang der Aufnahmeöffnung verteilt angeordnet sind. Die Haltezungen weisen mit ihren, bevorzugt federnden freien Enden, bezüglich der Aufnahmeöffnung nach innen in Richtung der Durchgangsachse der Aufnahmeöffnung. Dadurch wird eine kreuz- oder sternförmige Anordnung der Federzungen realisiert, die mit ihren freien Enden radial gegeneinander zur Achse der Durchgangsöffnung ausgerichtet sind. Der zwischen den freien Enden der Haltezungen begrenzte Eintrittsquerschnitt ist kleiner als der durch den Öffnungsrand begrenzte freie Öffnungsquerschnitt der Aufnahmeöffnung. Beim Einsetzen werden die Haltezungen von der Kugel bezüglich der Aufnahmeöffnung nach außen gebogen, bevorzugt elastisch federnd, bis die Kugel in die Aufnahmeöffnung eingeschnappt ist, und die Haltezungen in ihre ursprüngliche Form zurückfedern. Der Vorteil von zwei oder mehr Haltezungen, die bevorzugt als biegeelastische Federzungen ausgebildet sein können, ist, dass jede einzelne Haltezunge beim Einsetzen um einen kleineren Betrag aufgebogen wird, als wenn nur eine Haltezunge vorhanden ist. Durch die Ausbildung, Form und Anordnung der Haltezungen kann die Haltewirkung auf die im Betrieb zu erwartenden Beanspruchungen optimiert werden.

Zumindest zwei Haltezungen können bezüglich der Aufnahmeöffnung paarweise gegenüberliegend angeordnet sein. Dadurch wird eine zur Achse der Durchgangsöffnung symmetrische

Anordnung gebildet, bei welcher der Eintrittsquerschnitt dem radialen Abstand der freien Enden der paarweise radial in die Aufnahmeöffnung vorstehenden Haltezungen entspricht.

Es kann vorgesehen sein, dass zumindest eine der Haltezungen in einem Winkel zwischen 0° und 90°, bevorzugt zwischen 0° und 45°, zur Längsachse ausgerichtet ist. Beim Einsetzen eines mit Kugeln bestückten Kugelkäfigs zwischen Innenwelle und Hohlwelle kann eine funktionsbedingt aus der Aufnahmeöffnung über den Umfang des Kugelkäfigs vorstehende Kugel bei nicht exakt koaxialer Positionierung mit ihrem vorstehenden Teil axial gegen eine Stirnfläche von Innen- oder Hohlwelle anschlagen, so dass eine Kraft ausgeübt wird, durch welche die Kugel aus der Kugelaufnahme herausgestoßen werden kann. Dies kann dadurch wirksam vermieden werden, dass erfindungsgemäß mindestens eine, bevorzugt mehrere Haltezungen in Längsrichtung, oder in einem spitzen Winkel kleiner als 90° zur Längsachse angeordnet sind. Ein Vorteil dabei ist, dass die Kugel durch die Haltezungen gegen unerwünschten Kontakt mit Teilen der Wellen geschützt ist, und gleichzeitig eine eventuell dennoch in axialer Richtung auf die Kugel ausgeübte Kraft von den Haltezungen abgefangen wird, und die Kugel sicher in der Aufnahmeöffnung gehalten wird. In einer vorteilhaften Weiterbildung sind je Aufnahmeöffnung vier oder sechs Haltezungen, besonders bevorzugt genau vier oder genau sechs Haltezungen, vorgesehen.

Bevorzugt können zumindest zwei Haltezungen bezüglich der Längsachse symmetrisch angeordnet sein. Durch eine bevorzugt spiegelsymmetrische Anordnung, insbesondere paarweise, können die hauptsächlich beim Einsetzen und im Betrieb zu erwartenden Belastungen aufgefangen werden.

Eine vorteilhafte Ausführung der Erfindung sieht vor, dass mindestens eine Haltezunge relativ zur Achse der Aufnahmeöffnung geneigt ist, mit einem Neigungswinkel zwischen 5° und 85°, bevorzugt zwischen 15° und 45°. Die Achse verläuft zentral in Durchgangs- bzw. Eintrittsrichtung durch die Aufnahmeöffnung, folglich bezogen auf die Lenkwelle in radialer Richtung quer durch die Längsachse. Damit eine Haltezunge vom Öffnungsrand in die Aufnahmeöffnung vorsteht, ist sie erfindungsgemäß schräg zur Achse der Aufnahmeöffnung angeordnet, also in einem Winkel größer als 0°.

Für die Funktion ist es vorteilhaft, dass bezüglich der Aufnahmeöffnung gegenüberliegende Haltezungen in einem Öffnungswinkel von kleiner als 120° gegeneinander geneigt sind. Bevorzugt beträgt der Öffnungswinkel zwischen 45° und 90°. Der Öffnungswinkel definiert den Winkel, mit dem die Haltezungen vom Inneren der Aufnahmeöffnung aus gesehen in Richtung der Achse gegeneinander geneigt sind, also zusammenlaufen. Ein großer Öffnungswinkel bedeutet, dass die Haltezungen bezüglich der Achse der Aufnahmeöffnung relativ steil in den Durchgangsquerschnitt vorstehen, und entsprechend beim Einsetzen stärker gebogen werden müssen. Bei einem kleinen Öffnungswinkel müssen die Haltezungen entsprechend weniger umgebogen werden, wodurch die Materialbeanspruchung verringert wird, allerdings auch eine geringere Haltekraft ausgeübt wird, mit der die Kugel in der Aufnahmeöffnung festgehalten wird. Je nachdem, wie weit die Kugel aus der Aufnahmeöffnung vorsteht, ist ein Öffnungswinkel zwischen 45° und 120° gut geeignet, um eine einfache Montage und eine sichere Halterung der Kugel zu gewährleisten.

Eine Optimierung der Haltezungen kann dadurch erfolgen, dass der Öffnungswinkel zwischen zwei gegenüberliegenden Haltezungen im Wesentlichen dem Kugelaustrittswinkel entspricht, den an die Kugeloberfläche im Bereich der Haltezungen angelegte Tangenten miteinander in einer Ebene einschließen, in der die Achse der Aufnahmeöffnung verläuft. Unter im Wesentlichen ist zu verstehen, dass der Öffnungswinkeln dem Kugelaustrittswinkel mit einer Abweichung von ±20° entspricht. Bevorzugt wird der Kugelaustrittswinkel an den freien Enden der Haltezungen ermittelt. Dadurch folgen die Haltezungen vom Öffnungsrand der Aufnahmeöffnung bis zu ihren freien Enden, die die Eintrittsöffnung begrenzen, in etwa der Kugeloberfläche. Mit anderen Worten schmiegen sich die Haltezungen an den Kugelquerschnitt an, bevorzugt ohne die Kugeln vorzuspannen, d.h. vorspannungsfrei. Dadurch wird ein optimaler Kompromiss zwischen einer einfachen und sicheren Montage der Kugeln bei gleichzeitig möglichst hoher Haltewirkung erreicht.

Es ist vorteilhaft, dass die Aufnahmeöffnung und/ oder die Haltezunge innen zumindest bereichsweise kugelförmig geformt ist. Dadurch kann eine Kugel in der Aufnahmeöffnung allseitig mit gleichmäßigem Spiel sicher umschlossen und gehalten werden. Alternativ kann die Aufnahmeöffnung einen im Wesentlichen zylindrischen, bevorzugt kreiszylindrischen, Querschnitt haben, und die Haltezunge einen von der Aufnahmeöffnung aus gesehen in Achsrichtung konisch zusammenlaufenden Raum begrenzen.

In einer erfindungsgemäß ausgestalteten Kugelaufnahme kann vorgesehen sein, dass die den Haltezungen gegenüberliegende Öffnung der Aufnahmeöffnung mindestens ein festes Halteelement aufweist, welches einen Öffnungsquerschnitt begrenzt, der kleiner ist als der Durchmesser einer Kugel. Die Aufnahmeöffnung hat eine erste Öffnung, an der erfindungsgemäße Haltezungen angeordnet sind, zwischen denen die Kugel vorsteht, beispielsweise nach außen, um in der Hohlwelle abrollen zu können, und eine zweite Öffnung, aus der die Kugel ebenfalls vorsteht, beispielsweise nach innen, um auf der Innenwelle abrollen zu können. Das Einsetzen der Kugeln erfolgt wie beschrieben von außen durch die Haltezungen. Nach innen ist kein Durchtritt der Kugeln erforderlich, daher können dort feste Formschluss-Haltelemente ausgebildet sein, beispielsweise durch einen in die Aufnahmeöffnung vorspringenden, ganz oder teilweise umfangsseitig umlaufenden Öffnungsrand. Dieser kann starr ausgebildet sein, so dass die Kugel formschlüssig in der Aufnahmeöffnung gehalten wird, wobei lediglich sichergestellt sein muss, dass die Kugel hinreichend weit über den Öffnungsrand radial vorsteht. Die Erfindung umfasst ebenfalls einen Kugelkäfig zur koaxialen Anordnung zwischen einer Hohlwelle und einer darin teleskopierbar angeordneten Innenwelle, der hohlprofilartig koaxial zu einer Längsachse ausgebildet ist und der mindestens eine radial durchgehende Aufnahmeöffnung aufweist, in der eine Kugel frei drehbar aufnehmbar ist, und die mindestens einen, bevorzugt kreisförmig, umlaufenden Öffnungsrand aufweist. Erfindungsgemäß ist vorgesehen, dass zumindest eine Haltezunge, die sich über einen Umfangsteilbereich der Aufnahmeöffnung erstreckt, von dem Öffnungsrand in Richtung der Aufnahmeöffnung vorsteht.

Der Kugelkäfig kann im Einzelnen ausgestaltet sein, wie oben im Zusammenhang mit der erfindungsgemäßen Lenkwelle beschrieben.

### Beschreibung der Zeichnungen

Vorteilhafte Ausführungsformen der Erfindung werden im Folgenden anhand der Zeichnungen näher erläutert. Im Einzelnen zeigen:
- Figur 1: eine schematische perspektivische Ansicht einer Lenkwelle,
- Figur 2: eine Ansicht einer Lenkwelle gemäß Figur 1 in auseinander gezogenem Zustand,
- Figur 3: eine Teilansicht einer Innenwelle der Lenkwelle gemäß Figur 1 mit montiertem Kugelkäfig,
- Figur 4: einen Längsschnitt entlang der Längsachse durch die Lenkwelle gemäß Figur 1,
- Figur 5: eine vergrößerte Detailansicht von Figur 4,
- Figur 6: einen Kugelkäfig einer Lenkwelle gemäß Figuren 1 bis 5 einzeln in perspektivischer Ansicht,
- Figur 7: eine Seitenansicht des Kugelkäfigs gemäß Figur 6,
- Figur 8: eine Seitenansicht wie in Figur 7 einer zweiten Ausführungsform eines Kugelkäfigs.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

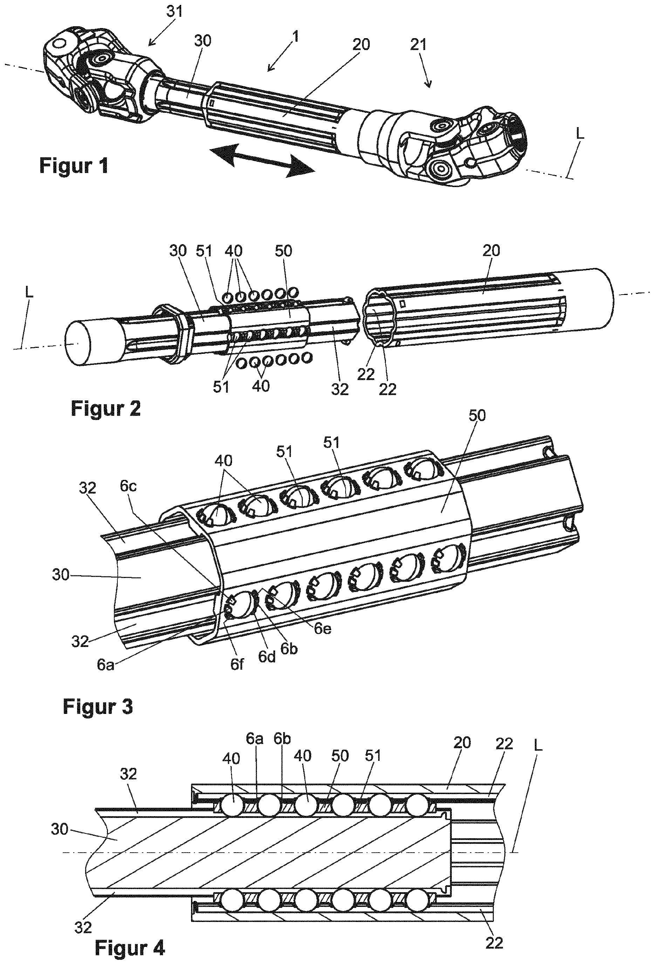

Figur 1 zeigt in perspektivischer Ansicht eine schematisch dargestellte Lenkwelle 1, die eine Hohlwelle 20, auch als äußere Welle oder Außenwelle bezeichnet, und eine Innenwelle 30, auch innere Welle bezeichnet, aufweist, die gegeneinander teleskopierbar sind in Richtung der Längsachse L, d.h. in der mit dem Doppelpfeil angedeuteten Axial- bzw. Längsrichtung.

Die Hohlwelle 20 weist an ihrem freien Ende, welches bezüglich der inneren Welle 30 in Längsrichtung abgewandt ist, eine Gabel 21 auf, welche einen Teil eines Universalgelenks bildet, mit dem die Lenkwelle 1 momentschlüssig mit einem Lenkstrang verbunden sein kann. Entsprechend weist die Innenwelle 30 an ihrem freien Ende, welches bezüglich der Hohlwelle 20 in Längsrichtung abgewandt ist, eine Gabel 31 auf, welche einen Teil eines weiteren Universalgelenks bildet, mit dem die Lenkwelle 1 momentschlüssig mit dem Lenkstrang verbunden sein kann. Die Wellen 20 und 30 sind bevorzugt beide als Hohlprofile aus gut kaltumformbarem Stahl gefertigt.

Figur 2 zeigt die Lenkwelle 1 gemäß Figur 1 in einer Explosionsdarstellung, in der die Innenwelle 30 aus der Hohlwelle 20 in Richtung der Längsachse L herausgezogen dargestellt ist.

Zwischen der Hohlwelle 20 und der Innenwelle 30 sind als Kugeln 40 ausgebildete Wälzkörper angeordnet, wie dies in dem Längsschnitt in Figur 4 deutlich erkennbar ist.

Die Hohlwelle 20 weist in ihrer Innenfläche in Längsrichtung durchgehende Nuten 22 auf, und die Innenwelle 30 weist diesen radial gegenüberliegende, korrespondierende Nuten 32 auf, die als Wälzkörperlaufbahnen für die Kugeln 40 dienen, d.h. Kugellaufbahnen bilden. Die Kugeln 40 sind zwischen diesen Nuten 22 und 32 derart angeordnet, dass sie in Richtung der Längsachse L darin abrollen können und somit eine lineare Wälzlagerung für eine teleskopierende Relativbewegung von Innenwelle 30 und Hohlwelle 20 bilden. Außerdem wirken die Kugeln 40 als Formschlusselemente, die bezüglich einer relativen Drehung um die Längsachse L formschlüssig in die Nuten 22 und 32 eingreifen, wodurch sie ein als Lenkmoment in die Innenwelle 30 eingebrachtes Drehmoment auf die Hohlwelle 20 übertragen. In dem gezeigten Beispiel sind insgesamt vier Nuten 22 bzw. 32 in Umfangsrichtung verteilt um die Längsachse L angeordnet.

Die Kugeln 30 sind in einem Wälzlagerkäfig aufgenommen, der als Kugelkäfig 50 ausgebildet ist. Der Kugelkäfig 50 weist für jede der Kugeln 40 eine Kugelaufnahme in Form einer radial durchgehenden Aufnahmeöffnung 51 auf, in der jeweils eine Kugel 40 mit Spiel frei drehbar aufgenommen ist und radial nach innen und außen so weit vorsteht, dass sie in den Nuten 22 und 32 in Längsrichtung ungehindert abrollen kann.

Jeweils eine Mehrzahl von Aufnahmeöffnungen 51 ist in Längsrichtung jeweils mit Abstand zueinander angeordnet, so dass die darin aufgenommenen Kugeln 40 jeweils eine axiale Kugelreihe bilden, im dargestellten Beispiel aus jeweils sechs Kugeln 40, die zwischen jeweils paarweise radial gegenüberliegenden Nuten 22 bzw. 32 abrollbar sind. Durch den Kugelkäfig 50 werden die Kugeln 40 der Kugelreihen bei einer telekopierenden Rela-tivbewegung von Innenwelle 30 und Hohlwelle 20 in festem Abstand zueinander geführt.

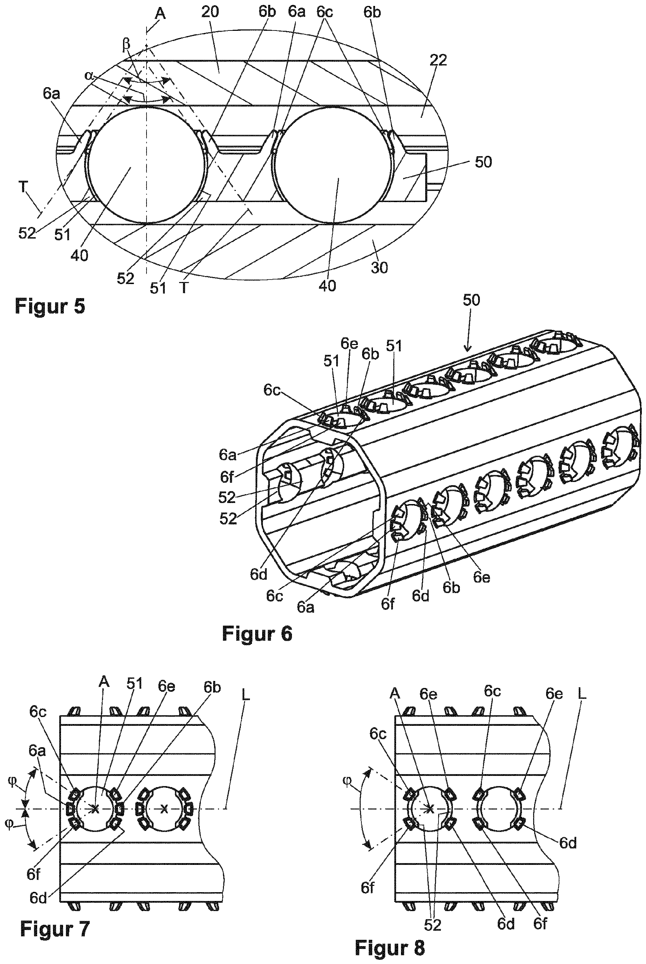

Die Aufnahmeöffnungen 51 haben einen kreisrunden Querschnitt mit einer Achse A, die sich zentral in Durchgangsrichtung erstreckt und senkrecht durch die Längsachse L verläuft, wie aus der vergrößerten Schnittdarstellung von Figur 5 entnehmbar. An jeder Aufnahmeöffnung 51 sind an deren äußeren, kreisförmig umlaufenden Öffnungsrand erfindungsgemäße Haltezungen 6a, 6b, 6c, 6d, 6e und 6f angeordnet

Figur 4 zeigt einen Längsschnitt entlang der Längsachse L, und Figur 5 eine vergrößerte Detailansicht daraus.

Aus Figur 5 ist erkennbar, wie jeweils eine Kugel 40 in einer Aufnahmeöffnung 51 aufgenommen ist. Die Aufnahmeöffnung 51 hat einen hohlkugelförmigen Querschnitt, der die Kugel 40 allseitig mit Spiel umgibt, wenn diese wie gezeichnet auf der Achse A angeordnet ist.

Auf der radialen Innenseite des Kugelkäfigs 50 ragt die Kugel 40 nach innen aus der Aufnahmeöffnung 51 vor und steht in Rollkontakt mit der Außenseite der Innenwelle 30. Dabei ist der Durchmesser des Öffnungsrands 52 zumindest abschnittweise kleiner als der Durchmesser der Kugel 40, so dass der Öffnungsrand 52 als festes Halteelement wirkt, welcher die Kugel 40 nach innen, in radialer Richtung auf die Innenwelle 30 zu, formschlüssig in der Aufnahmeöffnung 51 hält.

In den Ansichten von Figuren 6 und 7 ist erkennbar, dass der feste Öffnungsrand 52 abschnittweise über den Umfang der Aufnahmeöffnung 51 umläuft.

Aus Figur 5 ist entnehmbar, dass zwei bezüglich der Achse A der Aufnahmeöffnung 51 diametral gegenüberliegende Haltezungen 6a und 6b gegen diese Achse A schräg ausgerichtet sind, und dabei in einem Öffnungswinkel β (beta) gegeneinander, d.h. auf einander zu, geneigt sind, der wie im gezeigten Beispiel vorzugsweise zwischen 45° und 90° betragen kann. Dabei entspricht der Öffnungswinkel β vorzugsweise im Wesentlichen (= ±20°) einem Kugelaustrittswinkel a, den an die Kugeloberfläche der Kugel 40 im Bereich der Haltezungen 6a und 6b angelegte, gestrichelt eingezeichnete Tangenten T miteinander in einer Ebene einschließen, in der die Achse A der Aufnahmeöffnung 51 verläuft, dies ist in Figur 5 die Zeichenebene. Dadurch umschmiegen die Haltezungen 6a und 6b die Kugel 40 im Bereich der Eintrittsöffnung der Aufnahmeöffnung 51, aus der die Kugel 40 nach außen vorsteht und im Rollkontakt von innen an der Hohlwelle 20 anliegt. Dabei können die Haltezungen 6a und 6b auch bogenförmig bzw. innen hohlkugelabschnittförmig ausgebildet sein, so dass sie die Kugel 40 mit gleichmäßigem radialem Spiel in losem Formschluss umgreifen und in der Aufnahmeöffnung 51 halten.

Wie bereits in Figur 3 gezeichnet, sind in der ersten dargestellten Ausführungsform pro Aufnahmeöffnung 51 jeweils sechs Haltezungen 6a, 6b, 6c, 6d, 6e und 6f vorgesehen, die jeweils als bezüglich der Achse A diametral gegenüberliegende Paare 6a-6b, 6c-6d und 6e-6f angeordnet sind. Diese Anordnung ist besonders gut in der seitlichen Ansicht von Figur 7 erkennbar. Daraus ergibt sich auch, dass das Haltezungen-Paar 6a-6b in Längsrichtung parallel zur Längsachse L angeordnet ist, während die Haltezungen-Paare 6c-6d und 6e-6f zur Längsachse L spiegelsymmetrisch angeordnet sind, in einem Winkel ϕ zwischen 0° und 90°, bevorzugt kleiner als 45°. Dadurch wird eine sichere Halterung und Abstützung der Kugel 40 beim Aufsetzen auf die Innenwelle 30 und beim Einsetzen in die Hohlwelle 20 gewährleistet.

Dadurch, dass insgesamt drei Haltezungen-Paare 6a-6b, 6c-6d und 6e-6f vorgesehen sind, ist die Haltewirkung auch bei einer Beschädigung einer oder mehrerer der Haltezungen 6a, 6b, 6c, 6d, 6e, 6f redundant gesichert, solange nur ein einziges der genannten Paare intakt ist. Sämtliche der Paare können bevorzugt ausgestaltet sein wie für das Haltezungen-Paar 6a-6b in Figur 5 beschrieben.

Figur 8 zeigt in derselben Ansicht wie Figur 7 eine zweite Ausführungsform mit nur zwei Haltezungen-Paaren 6c-6d und 6e-6f. Diese Ausführung ist kann im Einzelfall vorteilhaft sein, beispielsweise zur optimierten Nutzung des zur Verfügung stehenden Bauraums.

Der in Figur 6 einzeln dargestellt Kugelkäfig 50 kann bevorzugt als einstückiges Kunststoff-Spritzgussteil aus themoplastischem Polymer hergestellt werden.

### Bezugszeichenliste

- 1: Lenkwelle
- 20: Hohlwelle
- 21: Gabel
- 22: Nut
- 30: Innenwelle
- 31: Gabel
- 32: Nut
- 40: Kugel
- 50: Kugelkäfig
- 51: Aufnahmeöffnung (Kugelaufnahme)
- 52: Öffnungsrand
- 6a, 6b, 6c, 6d, 6e, 6f: Haltezungen
- L: Längsachse
- A: Achse
- ϕ: Winkel
- β: Öffnungswinkel
- α: Kugelaustrittswinkel

## Patentansprüche

1. Lenkwelle (1) für ein Kraftfahrzeug, umfassend eine Hohlwelle (20) und eine Innenwelle (30), welche koaxial in der Hohlwelle (20) angeordnet, relativ zur Hohlwelle (20) in Richtung der Längsachse (L) der Lenkwelle (10) teleskopierbar und mit der Hohlwelle (20) über mindestens eine Kugel (40) drehmomentschlüssig verbunden ist, wobei koaxial zwischen Innenwelle (30) und Hohlwelle (20) ein Kugelkäfig (50) angeordnet ist, der mindestens eine radiale Aufnahmeöffnung (51) aufweist, in der eine Kugel (40) frei drehbar aufgenommen ist, und die einen umlaufenden Öffnungsrand aufweist, wobei zumindest eine Haltezunge (6a, 6b, 6c, 6d, 6e, 6f), die sich über einen Umfangsteilbereich der Aufnahmeöffnung (51) erstreckt, von dem Öffnungsrand vorsteht, wobei die Haltezunge (6a, 6b, 6c, 6d, 6e, 6f) federnd ausgebildet ist, und zwei oder mehr Haltezungen (6a, 6b, 6c, 6d, 6e, 6f) über den Umfang der Aufnahmeöffnung (51) verteilt angeordnet sind, wobei zumindest zwei Haltezungen (6a-6b, 6c-6d, 6e-6f) bezüglich der Aufnahmeöffnung (51) paarweise gegenüberliegend angeordnet sind, **dadurch gekennzeichnet, dass** mehrere Paare von einander jeweils gegenüberliegenden Haltezungen (6a-6b, 6c-6d, 6e-6f) realisiert sind.

2. Lenkwelle nach einem der vorangehenden Ansprüche, **dadurch gekennzeichnet, dass** zumindest eine der Haltezungen (6a, 6b, 6c, 6d, 6e, 6f) in einem Winkel (ϕ) zwischen 0° und 90°, bevorzugt zwischen 0° und 45°, zur Längsachse (L) ausgerichtet ist.

3. Lenkwelle nach einem der vorangehenden Ansprüche, **dadurch gekennzeichnet, dass** zumindest zwei Haltezungen (6a, 6b, 6c, 6d, 6e, 6f) bezüglich der Längsachse (L) symmetrisch angeordnet sind.

4. Lenkwelle nach einem der vorangehenden Ansprüche, **dadurch gekennzeichnet, dass** bezüglich der Aufnahmeöffnung (51) gegenüberliegende Haltezungen (6a-6b, 6c-6d, 6e-6f) in einem Öffnungswinkel (β) von kleiner als 120°gegeneinander geneigt sind.

5. Lenkwelle nach einem der vorangehenden Ansprüche, **dadurch gekennzeichnet, dass** der Öffnungswinkel (β) zwischen zwei gegenüberliegenden Haltezungen (51) im Wesentlichen dem Kugelaustrittswinkel (α) entspricht, den an die Kugeloberfläche im Bereich der Haltezungen (6a, 6b, 6c, 6d, 6e, 6f) angelegte Tangenten (T) miteinander in einer Ebene einschließen, in der die Achse (A) der Aufnahmeöffnung (51) verläuft.

6. Lenkwelle nach einem der vorangehenden Ansprüche, **dadurch gekennzeichnet, dass** die Aufnahmeöffnung (51) und/ oder die Haltezunge (6a, 6b, 6c, 6d, 6e, 6f) zumindest bereichsweise hohlkugelförmig geformt ist.

7. Lenkwelle nach einem der vorangehenden Ansprüche, **dadurch gekennzeichnet, dass** die den Haltezungen (6a, 6b, 6c, 6d, 6e, 6f) gegenüberliegende Öffnung mindestens ein festes Halteelement (52) aufweist, welches einen Öffnungsquerschnitt begrenzt, der kleiner ist als der Durchmesser einer Kugel (40).

8. Lenkwelle nach einem der vorangehenden Ansprüche, **dadurch gekennzeichnet, dass** der Kugelkäfig (50) als Kunststoffteil ausgebildet ist, bevorzugt als Kunststoff-Spritzgussteil, an dem mindestens eine Haltezunge (6a, 6b, 6c, 6d, 6e, 6f) einstückig angeformt ist.

9. Kugelkäfig (50) zur koaxialen Anordnung zwischen einer Hohlwelle (20) und einer darin teleskopierbar angeordneten Innenwelle (30), der hohlprofilartig koaxial zu einer Längsachse (L) ausgebildet ist und der mindestens eine radial durchgehende Aufnahmeöffnung (51) aufweist, in der eine Kugel (40) mit Spiel zu deren Innenwandung frei drehbar aufnehmbar ist, und die mindestens einen umlaufenden Öffnungsrand aufweist, wobei zumindest eine Haltezunge (6a, 6b, 6c, 6d, 6e, 6f), die sich über einen Umfangsteilbereich der Aufnahmeöffnung (51) erstreckt, von dem Öffnungsrand vorsteht, wobei die Haltezunge (6a, 6b, 6c, 6d, 6e, 6f) federnd ausgebildet ist, und zwei oder mehr Haltezungen (6a, 6b, 6c, 6d, 6e, 6f) über den Umfang der Aufnahmeöffnung (51) verteilt angeordnet sind, wobei zumindest zwei Haltezungen (6a-6b, 6c-6d, 6e-6f) bezüglich der Aufnahmeöffnung (51) paarweise gegenüberliegend angeordnet sind, **dadurch gekennzeichnet, dass** mehrere Paare von einander jeweils gegenüberliegenden Haltezungen (6a-6b, 6c-6d, 6e-6f) realisiert sind.

## Claims

1. Steering shaft (1) for a motor vehicle, comprising a hollow shaft (20) and an inner shaft (30) which is arranged coaxially in the hollow shaft (20), can be telescoped relative to the hollow shaft (20) in the direction of the longitudinal axis (L) of the steering shaft (10), and is connected in a torque-transmitting manner to the hollow shaft (20) via at least one ball (40), a ball cage (50) being arranged coaxially between the inner shaft (30) and the hollow shaft (20), which ball cage (50) has at least one radial receiving opening (51), in which a ball (40) is received such that it can be rotated freely, and which radial receiving opening (51) has a circumferential opening edge, at least one retaining tongue (6a, 6b, 6c, 6d, 6e, 6f) which extends over a circumferential part region of the receiving opening (51) projecting from the opening edge, the retaining tongue (6a, 6b, 6c, 6d, 6e, 6f) being of resilient configuration, and two or more retaining tongues (6a, 6b, 6c, 6d, 6e, 6f) being arranged distributed over the circumference of the receiving opening (51), at least two retaining tongues (6a-6b, 6c-6d, 6e-6f) being arranged so as to lie opposite one another in pairs with regard to the receiving opening (51), **characterized in that** a plurality of pairs of retaining tongues (6a-6b, 6c-6d, 6e-6f) which in each case lie opposite one another are realized.

2. Steering shaft according to one of the preceding claims, **characterized in that** at least one of the retaining tongues (6a, 6b, 6c, 6d, 6e, 6f) is oriented at an angle (ϕ) of between 0° and 90°, preferably of between 0° and 45°, with respect to the longitudinal axis (L) .

3. Steering shaft according to either of the preceding claims, **characterized in that** at least two retaining tongues (6a, 6b, 6c, 6d, 6e, 6f) are arranged symmetrically with regard to the longitudinal axis (L).

4. Steering shaft according to one of the preceding claims, **characterized in that** retaining tongues (6a-6b, 6c-6d, 6e-6f) which lie opposite one another with regard to the receiving opening (51) are inclined with respect to one another at an opening angle (β) of less than 120°.

5. Steering shaft according to one of the preceding claims, **characterized in that** the opening angle (β) between two retaining tongues (51) which lie opposite one another corresponds substantially to the ball exit angle (α) which tangents (T) which are laid against the ball surface in the region of the retaining tongues (6a, 6b, 6c, 6d, 6e, 6f) enclose with one another in a plane, in which the axis (A) of the receiving opening (51) runs.

6. Steering shaft according to one of the preceding claims, **characterized in that** the receiving opening (51) and/or the retaining tongue (6a, 6b, 6c, 6d, 6e, 6f) are/is shaped in a hollow sphere-shaped manner at least in regions.

7. Steering shaft according to one of the preceding claims, **characterized in that** the opening which lies opposite the retaining tongues (6a, 6b, 6c, 6d, 6e, 6f) has at least one fixed retaining element (52) which has an opening cross section which is smaller than the diameter of a ball (40).

8. Steering shaft according to one of the preceding claims, **characterized in that** the ball cage (50) is configured as a plastic part, preferably as a plastic injection moulded part, on which at least one retaining tongue (6a, 6b, 6c, 6d, 6e, 6f) is integrally moulded in one piece.

9. Ball cage (50) for coaxial arrangement between a hollow shaft (20) and an inner shaft (30) which is arranged such that it can be telescoped therein, which ball cage (50) is configured in a hollow profile-like manner coaxially with respect to a longitudinal axis (L) and which has at least one radially continuous receiving opening (51), in which a ball (40) can be received with play with respect to its inner wall such that it can be rotated freely, and which receiving opening (51) has at least one circumferential opening edge, at least one retaining tongue (6a, 6b, 6c, 6d, 6e, 6f) which extends over a circumferential part region of the receiving opening (51) projecting from the opening edge, the retaining tongue (6a, 6b, 6c, 6d, 6e, 6f) being of resilient configuration, and two or more retaining tongues (6a, 6b, 6c, 6d, 6e, 6f) being arranged distributed over the circumference of the receiving opening (51), at least two retaining tongues (6a-6b, 6c-6d, 6e-6f) being arranged so as to lie opposite one another in pairs with regard to the receiving opening (51), **characterized in that** a plurality of pairs of retaining tongues (6a-6b, 6c-6d, 6e-6f) which in each case lie opposite one another are realized.

## Revendications

1. Arbre de direction (1) pour un véhicule automobile, comprenant un arbre creux (20) et un arbre intérieur (30) qui est disposé coaxialement dans l'arbre creux (20), est télescopique par rapport à l'arbre creux (20) en direction de l'axe longitudinal (L) de l'arbre de direction (10) et est relié par liaison de transmission de couple à l'arbre creux (20) par au moins une bille (40), dans lequel, coaxialement entre l'arbre intérieur (30) et l'arbre creux (20), une cage à bille (50) est disposée qui présente au moins une ouverture de réception radiale (51) dans laquelle une bille (40) est reçue en rotation libre et qui présente un bord d'ouverture périphérique, au moins une languette de retenue (6a, 6b, 6c, 6d, 6e, 6f) qui s'étend sur une zone partielle circonférentielle de l'ouverture de réception (51) faisant saillie à partir du bord d'ouverture, la languette de retenue (6a, 6b, 6c, 6d, 6e, 6f) étant réalisée de manière élastique, et deux languettes de retenue (6a, 6b, 6c, 6d, 6e, 6f) ou plus étant réparties sur la circonférence de l'ouverture de réception (51), au moins deux languettes de retenue (6a-6b, 6c-6d, 6e-6f) étant disposées en opposition par paires par rapport à l'ouverture de réception (51), **caractérisé en ce que** plusieurs paires de languettes de retenue (6a-6b, 6c-6d, 6e-6f) respectivement opposées les unes aux autres sont réalisées.

2. Arbre de direction selon l'une quelconque des revendications précédentes, **caractérisé en ce qu'**au moins l'une des languettes de retenue (6a, 6b, 6c, 6d, 6e, 6f) est alignée selon un angle (ϕ) compris entre 0° et 90°, de préférence entre 0° et 45°, par rapport à l'axe longitudinal (L).

3. Arbre de direction selon l'une quelconque des revendications précédentes, **caractérisé en ce qu'**au moins deux languettes de retenue (6a, 6b, 6c, 6d, 6e, 6f) sont disposées en symétrie par rapport à l'axe longitudinal (L) .

4. Arbre de direction selon l'une quelconque des revendications précédentes, **caractérisé en ce que** des languettes de retenue (6a-6b, 6c-6d, 6e-6f) opposées par rapport à l'ouverture de réception (51) sont inclinées les unes par rapport aux autres selon un angle d'ouverture (β) inférieur à 120°.

5. Arbre de direction selon l'une quelconque des revendications précédentes, **caractérisé en ce que** l'angle d'ouverture (β) entre deux languettes de retenue (51) opposées correspond substantiellement à l'angle de sortie de bille (α) que forment entre elles des tangentes (T) construites à la surface de bille au niveau des languettes de retenue (6a, 6b, 6c, 6d, 6e, 6f) dans un plan dans lequel s'étend l'axe (A) de l'ouverture de réception (51).

6. Arbre de direction selon l'une quelconque des revendications précédentes, **caractérisé en ce que** l'ouverture de réception (51) et/ou la languette de retenue (6a, 6b, 6c, 6d, 6e, 6f) est/sont formée (s) en forme de sphère creuse au moins par endroits.

7. Arbre de direction selon l'une quelconque des revendications précédentes, **caractérisé en ce que** l'ouverture opposée aux languettes de retenue (6a, 6b, 6c, 6d, 6e, 6f) présente au moins un élément de retenue fixe (52) qui délimite une section transversale d'ouverture qui est inférieure au diamètre d'une bille (40) .

8. Arbre de direction selon l'une quelconque des revendications précédentes, **caractérisé en ce que** la cage à bille (50) est réalisée sous la forme d'une pièce en matière plastique, de préférence d'une pièce en matière plastique moulée par injection, à laquelle au moins une languette de retenue (6a, 6b, 6c, 6d, 6e, 6f) est rapportée d'un seul tenant.

9. Cage à bille (50) destinée à être disposée coaxialement entre un arbre creux (20) et un arbre intérieur (30) disposé de manière télescopique dans celui-ci, qui est réalisée à la manière d'un profilé creux coaxialement à un axe longitudinal (L) et qui présente au moins une ouverture de réception radialement continue (51) dans laquelle une bille (40) peut être reçue en rotation libre avec du jeu par rapport à la paroi intérieure de celle-ci, et qui présente au moins un bord d'ouverture périphérique, au moins une languette de retenue (6a, 6b, 6c, 6d, 6e, 6f) qui s'étend sur une zone partielle circonférentielle de l'ouverture de réception (51) faisant saillie à partir du bord d'ouverture, la languette de retenue (6a, 6b, 6c, 6d, 6e, 6f) étant réalisée de manière élastique, et deux languettes de retenue (6a, 6b, 6c, 6d, 6e, 6f) ou plus étant réparties sur la circonférence de l'ouverture de réception (51), au moins deux languettes de retenue (6a-6b, 6c-6d, 6e-6f) étant disposées en opposition par paires par rapport à l'ouverture de réception (51), **caractérisée en ce que** plusieurs paires de languettes de retenue (6a-6b, 6c-6d, 6e-6f) respectivement opposées les unes aux autres sont réalisées.
